# EUROPEAN PATENT APPLICATION

(11) **EP 1 235 095 A1**
(43) Date of publication of application: **28.08.2002**
(21) Application number: 01947903.9
(22) Date of filing: 06.07.2001
(51) Int. Cl.: G02B 23/04, H04N 5/225

(54) **FIELD SCOPE WITH DIGITAL VIDEO CAMERA**

(30) Priority: 06.07.2000 JP 2000004739 U
(71) Applicant: Kamakura Koki Co., Ltd, Warabi-shi, Saitama 335-0002 (JP)
(72) Inventor: KAMAKURA, Toshiya, Kamakura Koki Co., Ltd, Warabi-shi, Saitama 335-0002 (JP); WATANABE, Naomi, Kamakura Koki Co., Ltd, Warabi-shi, Saitama 335-0002 (JP); KATO, Yuji, Kamakura Koki Co., Ltd, Warabi-shi, Saitama 335-0002 (JP)
(74) Representative: Leonhard, Frank Reimund, Dipl.-Ing.
(86) International application number: JP0105909
(87) International publication number: WO02005006

(57) **Abstract**

The objective of the invention is to provide a field scope with a digital video camera for observing an object both by eye and on the monitor, without losing such advantages of field scopes as having a large aperture, a light weight and a small size. The field scope with a digital video camera comprises an observation optical system having an objective optical system and an ocular optical system; beam-splitting means for taking a part of a light beam advancing along the light path of said observation optical system out from said light path, and guiding the rest of the light beam to said ocular optical system; and an image pickup unit for receiving the separated light beam.

## Description

### Technical Field

This invention relates to a field scope with a digital video camera, more particularly to a field scope with a digital video camera with which an object can be observed both by eye and on the monitor.

### Background Art

Field scopes with an image pickup unit are very convenient, because the user can observe an object on the monitor and video the object. For attaching an image pickup unit to a field scope has been employed a method of attaching an independent small image pickup unit to the eyepiece of a conventional field scope.

However, since an image pickup unit is attached to the eyepiece, on which the user sets his/her eye for observing an object, the intended use of the field scope, that is the user observes an object through the lens, is made impossible by this method. In other words, this method makes the user observe an object only as an image on the monitor that has been videoed and electrically treated, which prevents the user from observing the object directly through the field scope.

Binoculars have two optical systems, which allows the user to attach an image pickup unit to one of the optical systems for videoing and to observe an object through the other with his/her eye. This is an advantage of binoculars, which field scopes, a monocular that is provided with only one optical system, do not have.

An example of binoculars to which an image pickup unit is attached is a pair of binoculars with a silver film camera, which is called a pair of binoculars with a camera. With this kind of binoculars, the user can take photographs of the object being observed easily and quickly. In one of the left and right optical systems of this kind of conventional binoculars are placed a switching reflecting mirror and a prism which guides an incoming beam reflected and sent by the reflecting mirror to the film. In other words, the binoculars have such a structure as to carry out the following steps; a part of the light beam going along one of the observation optical systems is guided to the outside of the observation optical system by the switching reflecting mirror, reflected by the prism and directed to the film.

Images made by the beams obtained with the switching reflecting mirror are optically antipodal ones. Because images projected onto the film need to be erecting or inverted ones, the aforementioned binoculars employ such a reflecting optical system as a prism to reverse the obtained image to erecting or inverted one.

Since, as explained, conventional binoculars with a camera require one switching reflecting system and at least one reflecting optical system such as prisms, the apparatus becomes large. Besides, conventional such binoculars need, in addition to these switching reflecting system and prisms, such mechanical elements as a film chamber, a cartridge chamber, a rewinding device, and a shutter device, the whole apparatus inevitably becomes large.

In order to reduce the size of the apparatus, **JP-A 11-64742 (1999)** proposed an improvement. However, because the proposed apparatus was based on binoculars, the size of the whole apparatus compared to the aperture was unavoidably large.

**The technical object** of the invention is to provide a field scope with a digital video camera with which an object (or subject) can be observed by eye and on the monitor without losing such advantages of field scopes as having a large aperture, a light weight and a small size.

### Disclosure of the Invention

In order to achieve the aforesaid objective, a field scope with a digital video camera in accordance with the invention comprises an observation optical system having an objective optical system and an ocular optical system; beam-splitting means for taking a part of a light beam advancing along the light path of said observation optical system out from said light path, and guiding the rest of the light beam to said ocular optical system; and an image pickup unit for receiving the separated light beam.

One of the preferred embodiments of the invention is the field scope with a digital video camera recited above, wherein said beam-splitting means is a beam splitter that reflects a part of the light beam advancing along the light path of said observation optical system to the outside of said light path and transmits the rest of the light beam;
said field scope further comprising: a reflecting optical system, placed between said beam splitter and said image pickup unit, for reversing the optically antipodal image having been made by said beam splitter to an erecting image; and
an image recording device for reversing the optically antipodal image having been made by said beam splitter to an erecting image;
wherein said image pickup unit comprises a CCD image pickup element or CMOS image sensing element.

### Brief Description of the Drawings

- **Figure 1**: is a sectional fragmentary schematic illustration, viewed from the front, which shows part of the inside structure of field scope with a digital video camera 40.
- **Figure 2**: is a sectional schematic illustration, viewed from the bottom, which shows the inside structure of field scope with a digital video camera 40.

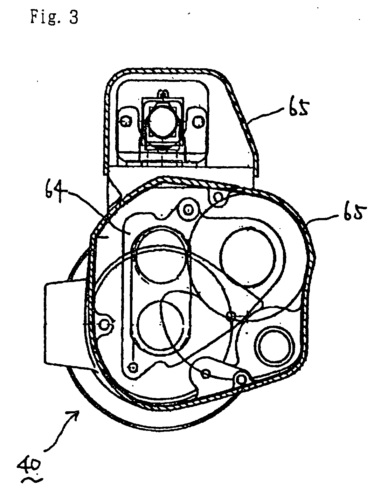

- **Figure 3**: is a sectional fragmentary schematic illustration, viewed from the left side, which shows part of the inside structure of field scope with a digital video camera 40.
- **Figure 4**: is a perspective schematic illustration that shows only the optical system in field scope with a digital video camera 10 and important structures in accordance with the invention.
- **Figure 5**: is a perspective schematic illustration that shows only the optical system in field scope with a digital video camera 30 and important structures in accordance with the invention.
- **Figure 6**: is a schematic block diagram that shows the image recording device employed in field scopes with a digital video camera 10 and 30.

### Detailed Description of the Preferred Embodiments

This invention provides a field scope with a digital video camera, which will be shortened to "a field scope with a DV" hereinafter, comprising: an observation optical system having an objective optical system and an ocular optical system; and beam-splitting means for taking a part of a light beam advancing along the light path of said observation optical system out from said light path and for transmitting and directing the rest of said light beam to said ocular optical system. The field scope with a DV is further characterized by inserting a reflecting member for reversing the optical antipodal image caused by said taking-out of a part of said light beam to the outside of the light path, or by processing the image when the image data are taken out from the image pickup unit for reversing said optical antipode. The latter option serves to make the apparatus smaller.

In summary, the feature of the field scope with a DV in accordance with this invention is to take a part of the light beam advancing along the light path of the observation optical system out to the outside of the path and to directly form an image of the branched light beam on the image pickup unit, which is an electronic device. In this method, the reflected light beam, which has been reflected by said beam-splitting means to the outside of the light path, directly enters the image pickup unit, which means that an image formed on the device is an optically antipode.

In one embodiment of this invention, for reversing the optically antipodal image, the field scope with a DV is further provided with a secondary reflecting device.

In another embodiment of this invention, an erecting image is always projected on the monitor display by temporarily storing the data of an image formed on the image pickup unit in a memory such as an image memory and then reading the data in a predetermined order out of the memory. In more detail, whatever position the image pickup unit may be placed at, and whatever position the image, which is formed on the image-forming face of the image pickup unit, may take, if a read-out order corresponding to the position is predetermined, an erecting image can always be obtained. Consequently, the latter embodiment enables the designer to place the image pickup unit and each optical member at his/her discretion more than the former. Also, the latter does not require reflecting optical systems such as a prism between the reflecting means and the image pickup element, which leads to further reduction of the apparatus both in size and weight.

For the beam-splitting means may be employed a beam splitter that reflects a part of the light beam to the outside of the light path to direct it to the image pickup unit and transmits the rest of the light beam.

In the followings the invention will be explained with reference to the embodiments shown in the figures.

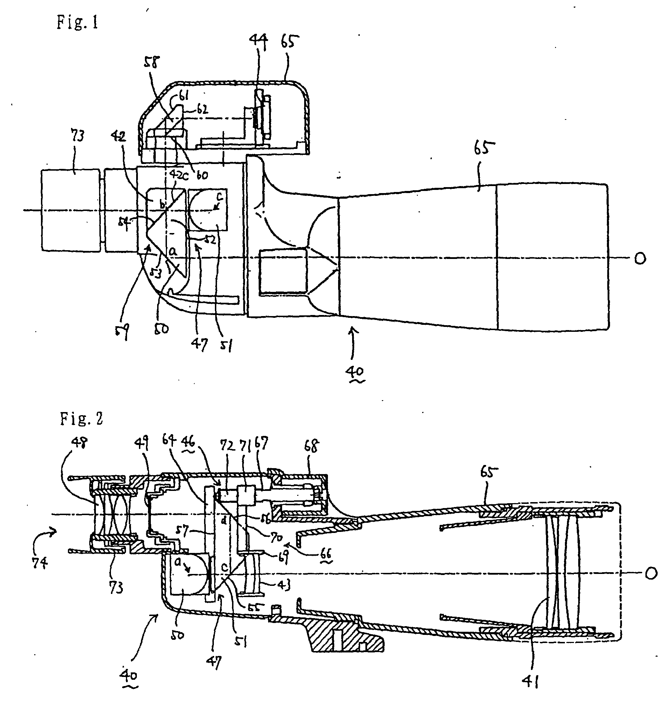

Field scope with a DV 40 comprises object lenses 41, focal adjusting means 46, Porro prism 47 (Figure 2), image pickup unit 44, antipode-reversing prism 58 (Figure 1), reticle 49, and eyepieces 48.

For object lenses 41 and eyepieces 48 may be employed object lenses and eyepieces having been used in conventional field scopes. Reticle 49 is a member used to compensate for an individual difference in diopter as will be explained hereinafter.

Porro prism 47 is a prism used for forming an erecting image, and is made by the combination of rectangular prism 50, which is placed on the side of eyepieces 48, and rectangular prism 51, which is placed on the side of object lenses 41. Rectangular prisms 50 and 51 are fixed to frame 64. A light beam coming into the inside of field scope with a DV 40 through objective lenses 41, which light beam will be called "an incoming beam" hereinafter, comes along optical axis O and enters Porro prism 47 from bottom face 52 of rectangular prism 50, as shown in Figure 1. Then, the incoming beam is reflected at point a on slope 53 of rectangular prism 50, point b on slope 54 of rectangular prism 50, point c on slope 55 of rectangular prism 51, as shown in Figure 1, and point d on slope 56 of rectangular prism 51, in this order, and sent from bottom face 57 of rectangular prism 51 to the outside of Porro prism 47, as shown in Figure 2, and further to eyepieces 48. Since an incoming beam advances along this path in field scope with a DV 40, an object can be observed by eye.

As shown in Figure 1, rectangular prism 50 is bound with rectangular prism 42 with the bottom face the latter being contacted with slope 54 of the former. Between the contacted faces is placed semi-transparent mirror 42c that is made of metal film. Thus, beam splitter 59 is comprised of rectangular prism 50, rectangular prism 42 and semi-transparent mirror 42c placed therebetween.

Beam splitter 59 functions as follows: a light beam coming into the inside of rectangular prism 50 from bottom face 52 thereof is reflected at point a on slope 53. A part of the reflected beam is further reflected at point b on slope 52 and then advances along the paths explained above. The rest of the reflected beam, which is a separated beam, goes straight through point b and further through rectangular prism 42 to the outside thereof. In summary, beam splitter 59 takes a part of the incoming beam out of the light path of the observation optical system and directs the rest of the incoming beam to the eyepieces.

For materials used to form semi-transparent mirror 42c may be employed anything as long as the obtained mirror serves to achieve the objective of this invention. Examples of the materials are Al, Ag, Au, Cu, Cr, W, Mo, Ti, Ta, Ge, Si, MgF₂, TiO₂, CeO₂, Al₂O₃, ZrO₂, CO-Cr, HfO₂, ZrTiO₄, etc.

For the formation of semi-transparent mirror 42c may also be used any method as long as the formed mirror serves to achieve the objective of this invention. A typical method is a vacuum deposition method.

The ratio of the quantity of light beam which is transmitted by semi-transparent mirror 42c to that of light beam which is reflected by the mirror can be determined through the selection of the material used for the metal film and the thickness of the film at the designer's discretion. The range of the ratio is usually from 6:4 to 8:2.

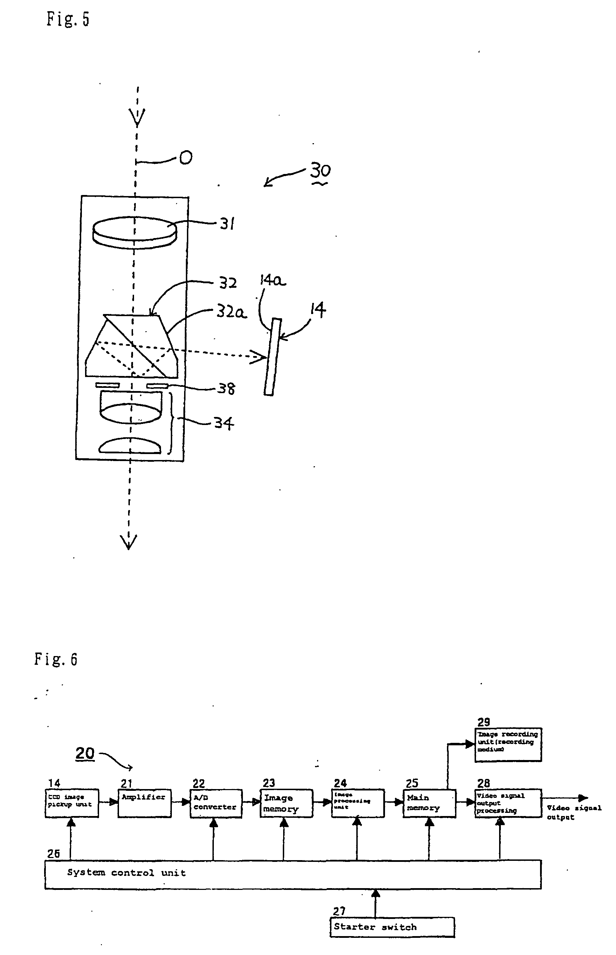

The structure of beam splitter 59 used in the first embodiment is not limited to that made of rectangular prism 50 and rectangular prism 42 with semi-transparent mirror 42c therebetween as shown in Figures 1 and 2, as long as a beam splitter employed has the aforementioned function. Another example is beam splitter 32 having the structure shown in Figure 5.

Antipode-reversing prism 58 is a member that reverses an optical antipodal image formed by beam splitter 59 to an erecting image.

As shown in Figure 1, antipode-reversing prism 58, which is a rectangular prism, is placed at a location where the separated light beam can enter the prism and at such a position as the separated light beam enters antipode-reversing prism 58 from slope 60 thereof perpendicularly to the slope. Bottom face 61 and slope 60 are joined with making an angle of 45°. Due to this structure, the separated light beam coming into antipode-reversing prism 58 is reflected by bottom face 61 and sent to the outside from slope 62. Thus, the image of a light beam is reversed from side to side after the beam passes through antipode-reversing prism 58. Since the separated light beam is an antipode to the light beam coming into the field scope, the separated beam that has passed through antipode-reversing prism 58 forms an antipodal image of the antipodal image, that is an erecting image, to the image formed by the incoming light beam.

CCD image pickup unit 44 videos the observed object as electric image data. This device is fixed at a predetermined distance from beam splitter 59 so that a part of the light beam reflected by semi-transparent mirror 42c of beam splitter 59 to the outside of the light path is further reflected by antipode- reversing prism 58 to form an image on image pickup face 14a of CCD image pickup unit 44.

The separated light beam that has passed through antipode- reversing prism 58 is sent to CCD image pickup unit 44. So, the image formed by the light beam sent to the image pickup unit is an erecting image.

Although the addition of the secondary reflecting prism makes field scope with a DV 40 larger, an erecting image can be obtained using image pickup unit 44 together with antipode-reversing prism 58, which is an optical reflecting member that is cheaper than an image-recording device and will be explained hereinafter. Consequently, the advantage of field scope with a DV 40 is that the production cost is lower compared with field scopes with a DV 10 and 30 that include an image- recording device.

Focal adjusting means 46 is means for focusing the field scope on the object. This means comprises focal adjusting lens 43, lens supporter 66, supporting rod 67 and finger screw 68, as shown in Figure 2. Focal adjusting lens 43 is placed on optical axis O between objective lenses 41 and Porro prism 47 with the lens face being perpendicular to axis O. Focal adjusting lens 43 is fixed to lens supporter 66. Lens supporter 66 comprises lens holder 69, which holds focal adjusting lens 43, arm 70, which is connected to lens holder 69, and nut-shaped female screw 71, which receives arm 70. Supporting rod 67 is set parallel with optical axis O with a part thereof protruding from main case 65. That part of supporting rod 67 which is inside main case 65 has screw thread cut on its surface, so that the part functions as male screw 72. Through the engagement of female screw 71 with male screw 72, lens supporter 66 is fitted on supporting rod 67. The protruding part of supporting rod 67, which is outside main case 65, is capped with finger screw 68. As finger screw 68 is turned, supporting rod 67 is moved parallel with optical axis O. The user can place focal adjusting lens 43 at any position on optical axis O by turning finger screw 68, which enables him/her to adjust the focus.

Also, a field stop, which holds reticle 49 and determines the visual field, is placed between the exit face of Porro prism 47, which is an erecting optical system, and the corresponding eyepieces 48.

Field scope with a DV 40 having the aforementioned structures functions as follows.

First, the user turns focal adjusting ring 73, which is associated with the eyepieces, to move eyepieces 48 so as to clearly see a scale that shows the range to be videoed and is set on reticle 49. This adjustment compensates for the individual difference in diopter. Then, the field scope is focused on the observed object through the turning of finger screw 68. This operation removes differences in focus between the image obtained from the observation optical system and that from the CCD image pickup unit.

A light beam reflected by the observed object comes into field scope with a DV 40 through objective lenses 41. This incoming beam advances along optical axis O, through focal adjusting lens 43, and enters Porro prism 47. The light beam is reflected at point a toward point b. Since rectangular prisms 50 and 42 comprise beam splitter 59 as explained above, a part of the incoming light beam is reflected at point b and the rest passes through point b.

The part of the light beam having been reflected at point b, then, advances in the observation optical system from point c through point d to eyepieces 48, which allows the user to observe the object by eye. The separated light beam, which passed through point b, is reflected by antipode-reversing prism 58 and sent to CCD image pickup unit 44. Just after it passes through point b, the separated light beam has an image reversed from side to side compared to the image the light beam incoming to the field scope has. This separated light beam is reflected by antipode-reversing prism 58 and reversed from side to side again, which means that the separated light beam which CCD image pickup unit 44 receives forms an erecting image. Thus a monitored image can be made from the light beam received by CCD image pickup unit 44.

The aforementioned optical functions enable the user to observe an object by eye and on the monitor with field scope with a DV 40.

The above-mentioned first embodiment, field scope with a DV 40, employs a reflecting optical system as means for reversing an image reversed from side to side that is made with a beam splitter to an erecting image. The field scope with a DV in accordance with this invention may alternatively employ an image-recording device for the means.

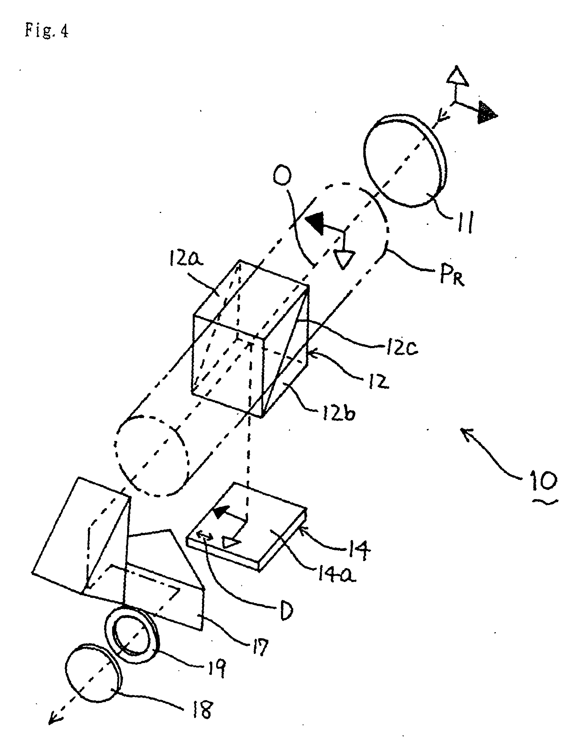

**Figure 4** shows field scope 10 with a DV, which is the second embodiment of the invention, using an image-recording device as means for reversing an image reversed from side to side that is made with a beam splitter to an erecting image. In Figure 4, only the observation optical system of field scope with a DV 10 and important features of the invention are illustrated.

Field scope with a DV 10 comprises an optical system the same as that a typical Porro prism monocular has, that is an optical system including objective lenses 11, Porro prism 17 and eyepieces 18. As is well known, a Porro prism is an erect prism. Between the face from which a light beam goes out of Porro prism 17 and the eyepieces 18 is fixed field stop 19.

Objective lenses 11 are supported so that they are movable en bloc backward and forward along their objective optical axis O. Objective lenses 11 move backward and forward correspondent to the turning of a focal adjusting ring (not shown) fitted on the middle part of the body of the field scope. In other words, when the focal adjusting ring is turned, objective lenses 11 are moved backward or forward correspondingly.

On light path P_{R} between objective lenses 11 and Porro prism 17 is fixed beam splitter 12. This beam splitter 12 is made of two rectangular prisms 12a and 12b with their slopes being contacted. A rectangular prism has two faces that are perpendicular to each other and one slope of 45° with each of said faces. On one of the contacted slopes is formed semi-transparent mirror 12c made of a metal-containing film. Beam splitter 12 is placed on light path P_{R}, with semi-transparent mirror 12c being held at an angle of 45° with objective axis O, so that a part of an incoming light beam through objective lenses 11 from the outside is reflected by semi-transparent mirror 12c and the rest passes through semi-transparent mirror 12c and enters Porro prism 17. The angle of semi-transparent mirror 12c with objective axis O is not limited to 45°, which is employed in this embodiment, but can be set to any angle at the designer's discretion. The method of forming semi-transparent mirror 12c is the same as that for semi-transparent mirror 42c.

Field scope with a DV 10 has a CCD image pickup unit 14. CCD image pickup unit 14 is fixed at a predetermined distance from beam splitter 12 so that the part of the light beam, which includes the image of the observed object, reflected by semi-transparent mirror 12c to the outside of light path P_{R} directly forms the image on image pickup or light-receiving face 14a. Field scope with a DV does not have between beam splitter 12 and CCD image pickup unit 14 such reflecting optical systems as antipode-reversing prism 58 in Field scope with a DV 10.

**In Figure 4**, each image comprised of an arrow having a white point and that having a black point shows the position of the image at a few points from the outside to CCD image pickup unit 14. These arrows teach that an image reversed from side to side is formed on image pickup face 14a. Also, arrow D shown on image pickup face 14a of image pickup unit 14 indicates the starting point and the course of scanning. As understood from the position of arrow D, CCD image pickup unit 14 has the starting point of scanning at a point corresponding to the upper right to the image of the observed object.

Field scope 10 with a DV 10 is provided with image- recording device 20 including CCD image pickup unit 14, as shown in Figure 6. Image-recording device 20 comprises CCD image pickup unit 14, amplifier 21, A/D converter 22, image memory 23, image-processing unit 24, main memory 25 and video signal output treatment unit 28. Image-recording device 20 further includes system control unit 26 that is electrically connected with each of CCD image pickup unit 14, amplifier 21, A/D converter 22, image memory 23, image-processing unit 24, main memory 25 and video signal output treatment unit 28, and starter switch 27 electrically connected with system control unit 26. Image-recording unit 29 is connected to main memory 25.

Starter switch 27 is switched on or off correspondent to a starter button (not shown) which field scope with a DV 10 has on its body. System control unit 26 controls each of CCD image pickup unit 14, amplifier 21, A/D converter 22, image memory 23, image-processing unit 24, main memory 25 and video signal output treatment unit 28 depending on the condition of starter switch 27.

When the starter button is pushed, starter switch 27 is switched on correspondingly. Then, system control unit 26 directs CCD image pickup unit 14 to start videoing. The analogue image signals made by photoelectric transfer with CCD image pickup unit 14 is amplified with amplifier 21 and sent to A/D converter 22 to be converted to digital image signals. Then, these digital image signals are temporarily stored in such image memory 23 as RAMs. The digital image signals stored in image memory 23 are the image data of the reversed image for one page.

Specifically, digital image signals are stored in image memory 23 as follows: the data obtained by horizontally scanning the reversed image formed on image pickup face 14a of CCD image pickup unit 14 are stored in image memory 23 bit by bit. In other words, on the memory cell array of image memory 23 is recorded the reversed image as bit image data.

Then, image-processing unit 24 reads out the image data stored in image memory 23. On this reading out, image- processing unit 24 designates the respective addresses of the memory cells in the array in the reversed order for each row to read out the image as a reversed image of the reversed image, which is an erecting image. Then unit 24 subjects the read-out data to gamma control, color correction, data compression, etc., and stores the processed data in main memory 25. In main memory 25, the digital data corresponding to the erecting image are addressed in a predetermined way and stored.

These data are sent to video signal output treatment unit 28 and image-recording unit 29.

As explained above, reversing the image can be carried out through reading out the stored data in the reversed order. Elements for carrying out this method are sold by several companies such as SANYO Electric Co., Ltd. and commercially available. An example of the elements is a CCD controller LS1, model LC99052 sold by SANYO Electric Co., Ltd.

The above-mentioned features enable the user to observe an object by eye and on the monitor simultaneously with field scope with a DV 10 as well as field scope with a DV 40.

The second embodiment of the invention, one of which examples is field scope with a DV 10, does not require between beam splitter 12 and CCD image pickup unit 14 such reflecting optical systems as prisms at all. Therefore, the apparatus can be reduced in size and weight for the reflecting optical system such as a prism.

As mentioned above, the second embodiment of the invention, field scope with a DV 10, has an observation optical system of the Porro prism-type monocular that uses a Porro prism as an erecting optical system. Instead of Porro prism 17 may be employed a roof prism, and another embodiment of the invention in which the apparatus has an observation optical system of the roof prism-type field scope is expected to have the same effects.

**Figure 5** shows the third embodiment of the invention. Field scope with a DV 30 as an example of the third embodiment has an observation optical system that employs a roof prism as an erecting optical system.

Field scope with a DV 30 has a typical observation optical system which ordinary roof prism-type field scopes have, comprising objective lenses 31, roof prism 32 and eyepieces 34. Between the face from which a light beam goes out of roof prism 32 and eyepieces 34 is fixed field stop 38.

In the third embodiment, one of the plural reflecting faces of the prism is replaced with a semi-transparent mirror that has the same function as semi-transparent mirror 12c of the second embodiment.

Specifically, as shown in Figure 5, semi-transparent mirror 32a is formed on one of the plural reflecting faces of roof prism 32. Semi-transparent mirror 32a reflects a part of the incoming light beam through objective lenses 31 and transmits the rest of the beam to guide it to the outside of the light path of the observation optical system. The beam directed to the outside forms an image on image pickup face 14a of CCD image pickup unit 14 fixed at a predetermined distance from roof prism 32. The method for forming semi-transparent mirror 32a is the same as that for semi-transparent mirror 42c.

Field scope with a DV 30, as well as field scope with a DV 10, is provided with image-recording device 20 including CCD image pickup unit 14 (Figure 6). The control by image- recording device 20 is the same as that in field scope with a DV 10.

The above-mentioned features enable the user to observe an object by eye and on the monitor simultaneously with field scope with a DV 30 as well as field scopes with a DV 10 and 40.

Since roof prism 32 is provided with semi-transparent mirror 32a, the third embodiment of the invention, one of which examples is field scope with a DV 30, require neither optical members exclusively used for providing semi-transparent mirror 32a, nor such reflecting optical systems as prisms between beam splitter 12 and CCD image pickup unit 14. Therefore, the apparatus can be reduced in size and weight more than field scope with a DV 10, which is also accompanied by a reduction in production cost.

Furthermore, the second and third embodiments may employ an arrangement in which such video-processing parts of the digital video camera as amplifier 21, A/D converter 22, image memory 23, image-processing unit 24, main memory 25, system control unit 26, etc. are placed along the observation optical system. This arrangement makes the shape of the whole apparatus flat, which will further reduce the size of the apparatus.

In the first, second and third embodiments, a pericle mirror, which has the same function as semi-transparent mirror 12c or 42c, may be used in place of beam splitter 12 or 59.

### Industrial Applicability

As explained above, the field scope with a DV in accordance with the invention has a beam splitter on the light path between the objective optical system and the ocular optical system of the observation optical system, which beam splitter divides an incoming light beam into two, one of which is for observation by eye and the other is used for videoing with an image pickup unit. Therefore, though monocular, the field scope enables the user to observe an object both by eye and on the monitor simultaneously.

For the field scope with a DV in accordance with the invention can be employed a cheap optical member such as an antipode-reversing prism as means for reversing an image formed by a light beam reflected to the outside of the light path, which reduces the production cost.

Also, the field scope with a DV in accordance with the invention may have an image pickup unit that directly receives the light beam reflected to the outside of the light path, which removes the use of optical members for the reversal. This feature makes the apparatus smaller, lighter and cheaper than a typical one corresponding to its aperture, without marring the operability. Further, irrespective of the position of the image pickup unit and that of an image formed on the image pickup face thereof, an erecting image can always be obtained only if the order of reading out the data is predetermined accordingly. This feature removes constraints, due to the use of optical members such as an antipode-reversing prism, on mechanical design of the field scope with a DV. The designer can arrange the image pickup unit and optical members largely at his/her discretion.

## Claims

1. **A field scope** with a digital video camera comprises:
n observation optical system having an objective optical system and an ocular optical system;
beam-splitting means for taking a part of a light beam advancing along the light path of said observation optical system out from said light path, and guiding the rest of the light beam to said ocular optical system; and
an image pickup unit for receiving the separated light beam.

2. Field scope as claimed in claim 1, wherein said beam-splitting means is a beam splitter that reflects a part of the light beam advancing along the light path of said observation optical system to the outside of said light path and transmits the rest of the light beam.

3. Field scope as claimed in claim 2, further comprising a reflecting optical system, placed between said beam splitter and said image pickup unit, for reversing the optically antipodal image having been made by said beam splitter to an erecting image.

4. Field scope as claimed in claim 2, further comprising an image-recording device for reversing the optically antipodal image having been made by said beam splitter to an erecting image.

5. Field scope as claimed in any of claims 1 to 4, wherein said image pickup unit comprises a CCD image pickup element or CMOS image sensing element.
